# EUROPÄISCHE PATENTANMELDUNG

(11) **EP 2 769 863 A1**
(43) Veröffentlichungstag der Anmeldung: **27.08.2014**
(21) Anmeldenummer: 13156008.8
(22) Anmeldetag: 20.02.2013
(51) Int. Cl.: B60J 7/00

(54) **Kraftfahrzeug mit einer lichtdurchlässigen Sonnenschutzeinrichtung für das Dach**

(71) Anmelder: Magna Steyr Fahrzeugtechnik AG & Co KG, 8041 Graz (AT)
(72) Erfinder: Hofer, Bernhard, 8053 Graz (AT); Mayr, Franz, 8323 St.Marein bei Graz (AT)
(74) Vertreter: Rausch, Gabriele

(57) **Zusammenfassung**

Kraftfahrzeug mit einer lichtdurchlässigen Einrichtung (3, 5), zur Abdeckung einer Karosserieöffnung zu einer Fahrgastzelle, wobei die lichtdurchlässige Einrichtung (3, 5) eine löchrige Struktur aufweist die aus Stegen (3a, 5a)gebildet ist, um die Blendwirkung einer äußeren Lichtquelle in der Fahrgastzelle zu verringern und um die in die Fahrgastzelle eintretende Luftströmung zu verringern und/oder zu steuern.

## Beschreibung

### Gebiet der Erfindung

Die vorliegende Erfindung betrifft ein Kraftfahrzeug mit einer lichtdurchlässigen Einrichtung, zur Abdeckung einer Karosserieöffnung zu einer Fahrgastzelle.

### Stand der Technik

Derartige Einrichtungen können beispielsweise in Form einer Platte oder eines Deckels ausgeführt sein.

Aus der DE 42 32 660 C1 ist ein lichtdurchlässiger Deckel bekannt, der wenigstens eine außenliegende Scheibe aufweist. Dieses System ist mechanisch betätigbar, um die Lichtdurchlässigkeit einstellen zu können.

In der DE 10 2006 039 010 A1 wird eine Abdeckvorrichtung beschrieben, welches bei einer Offenstellung eines Fahrzeugdachs zumindest bereichsweise die Öffnung im Fahrzeugdach abdeckt, wobei die Abdeckvorrichtung luft- und lichtdurchlässig ausgebildet ist.

### Zusammenfassung der Erfindung

Es ist eine Aufgabe der Erfindung, ein Kraftfahrzeug mit einer lichtdurchlässige Einrichtung zu schaffen die unerwünschte Umwelteinflüsse von außen verringert.

Die Lösung der Aufgabe erfolgt durch eine Kraftfahrzeug mit einer lichtdurchlässigen Einrichtung, zur Abdeckung einer Karosserieöffnung zu einer Fahrgastzelle, wobei die lichtdurchlässige Einrichtung eine löchrige Struktur aufweist die aus Stegen gebildet ist, um die Blendwirkung einer äußeren Lichtquelle in der Fahrgastzelle zu verringern und um die in die Fahrgastzelle eintretende Luftströmung zu verringern und/oder zu steuern.

Umwelteinflüsse von außen, beispielsweise Regen, Schmutz oder Luftströmungen sowie eine mögliche Blendwirkung durch eine äußere Lichtquelle die für Insassen der Fahrgastzelle als störend empfunden werden sollen hiermit wirksam verringert oder gesteuert werden.

Weiterbildungen der Erfindung sind in den abhängigen Ansprüchen, der Beschreibung sowie den beigefügten Zeichnungen angegeben.

Vorzugsweise bilden die Stege Wabenformen. Die Wabenform hat den Vorteil, dass eine große Festigkeit und hohe Stabilität bei kleinen Materialverbrauch und niedrigen Gewicht erzielt wird.

Gemäß einer weiteren Ausgestaltung der Erfindung können die Stege quadratische oder rechteckige Öffnungen bilden.

Es ist jedoch im Rahmen der Erfindung jede Geometrie und Form denkbar.

Die Stege sind senkrecht oder schräg zur Karosserieöffnung angeordnet. Es ist jedoch auch eine kombinierte Anordnung von senkrechten und schrägen Stegen möglich, um spezielle Effekte zu erreichen.

Um eine effiziente, leichte und doch feste bzw. steife Ausführung der lichtdurchlässigen Einrichtung zu Erzielen weist die Materialstärke der Stege bevorzugt zwischen 0,2 mm und 2 mm auf.

Als Werkstoff werden bevorzugt Metalle oder Kunststoffe, insbesondere Faserverbundwerkstoffe, verwendet. Diese Werkstoffe erlauben es hinsichtlich unterschiedlicher Anforderungen und Einsatzgebiet, eine leichte und preiswerte und dennoch stabile lichtdurchlässige Einrichtung herzustellen.

Eine metallische lichtdurchlässige Einrichtung bietet zudem den Vorteil, dass unerwünschte elektromagnetische Strahlung und Felder, auch als Elektro-Smog bezeichnet, zumindest teilweise abgehalten werden, da die metallische lichtdurchlässige Einrichtung mit der Karosserie einen Faraday'schen Käfig bildet.

In einer weiteren vorteilhaften Ausgestaltung ist das Verhältnis zwischen den Öffnungsdurchmessern die durch die Stege gebildet werden und der Höhe der Stege bei senkrechten Öffnungen zwischen 2:1 und 1:2 liegt. Dadurch ergibt sich eine flache Struktur, die trotz hoher Steifigkeit und Festigkeit, eine flache Bauweise ermöglicht.

Die lichtdurchlässige Einrichtung kann durch die passende Materialauswahl und Materialstärke auch als Deformationselement im Falle eines Unfalls wirken.

Gemäß einer Ausführungsform der Erfindung ist die Größe der Öffnungsdurchmesser zwischen 1 mm² und 2500 mm², bevorzugt zwischen 1 mm² und 400 mm².

Das Verhältnis der Materialstärke der Stege zur Höhe der Stege ist bevorzugt 1:2, 1:4 bzw. 1:8. Es ist natürlich im Rahmen der Erfindung möglich, dass das Verhältnis zwischen Breite und Höhe der Stege, falls gefordert, ein anderes ist.

Um die Blendwirkung durch Lichtquellen von außen weiter zu verringern weist zumindest ein Steg einen Winkel auf, der zur Vertikalen der Stege zwischen 0° und 45° beträgt. Dadurch kann das Licht, von außen in die Fahrgastzelle leuchtend, gezielt abgelenkt werden.

Auch der eintretende Luftstrom wird durch die Schrägstellung der Stege gezielt abgelenkt und kann somit einen direkten Luftstrom auf die Insassen der Fahrgastzelle verringern.

In einer weiteren Ausführungsform weisen zumindest zwei Stege unterschiedliche Winkel auf, welche spiegelsymmetrisch zu einer vertikalen Ebene der Stege ausgebildet sind. Es ist jedoch auch möglich, dass die Stege eine Vielzahl unterschiedlicher Winkel aufweisen und verschiedene Segmente mit zusätzlich unterschiedlichen Größen der Öffnungen bilden, welche entsprechend ihrer Anforderungen ausgebildet sind.

So kann beispielsweise die lichtdurchlässige Einrichtung in einer Öffnung eines Fahrzeugdaches eingesetzt werden. Um eine Blendwirkung für die Fahrzeuginsassen zu vermeiden oder zu verringern, können die Stege der lichtdurchlässigen Einrichtung so ausgeführt sein, dass die Stege für die vorderen Insassen in einem Winkel ausgebildet sind, so dass die Lichtstrahlen nicht direkt auf die Augen gelenkt werden. Besonders vorteilhaft ist, wenn die Stege, abhängig von der eventuellen Fahrerposition einen leicht geänderten Winkel als die benachbarten Stege aufweisen, um trotzdem eine ausreichende Beleuchtung des Innenraums zu erreichen.

Die Öffnungen der lichtdurchlässigen Einrichtung sind so ausgebildet, dass ein Zugriff von außerhalb in den Innenraum des Kraftfahrzeugs verhindert wird. Aufgrund der hohen Festigkeit und Steifigkeit ist ein gewaltsames Eindringen nur erschwert möglich, wodurch das Kraftfahrzeug eine niedrigere Versicherungseinstufung, aufgrund des verbesserten Diebstahlschutzes, erreicht.

Durch die Öffnungen in der lichtdurchlässigen Einrichtung ist es möglich, dass im geparkten Zustand des Kraftfahrzeugs ein Erwärmen bzw. Aufheizen der Fahrgastzelle durch beispielsweise Sonneneinstrahlung verhindert wird, wodurch beim Wiedereinsteigen in das Kraftfahrzeug keine unangenehm hohe Temperaturen vorliegen, wodurch wiederum im Betrieb Energie gespart werden kann, da die Fahrgastzelle nicht oder nur unwesentlich auf eine, für die Insassen angenehme, Raumtemperatur gekühlt werden muss.

Das ist vor allem dann vorteilhaft, wenn Insassen im Fahrzeuginnenraum verweilen müssen, wie es beispielsweise bei einem Stau möglich sein kann.

In einer weiteren Ausführungsform weisen die Stege der lichtdurchlässigen Einrichtung eine Farbgebung auf, welche das Innenraumgefühl der Insassen der Fahrgastzelle beeinflusst. Durch die Farbgebung der Stege und der Innenraumausstattung wird das von außen in die Fahrgastzelle leuchtendem Licht reflektiert und gibt den Farbgebung der Stege in die Fahrgastzelle ab.

In einer weiteren Ausführungsform ist die lichtdurchlässige Einrichtung alternativ mit einem Abdeckelement abdeckbar oder austauschbar ist. Das hat den Vorteil, dass besonders bei schlechten Witterungsverhältnissen, wie Kälte oder Nässe, diese nicht in den Innenraum des Kraftfahrzeugs eindringen können. Das Abdeckelement kann zumindest teilweise transparent ausgebildet sein und schließt die Öffnung dicht gegen die Fahrzeugkarosserie ab. Dadurch kann das Kraftfahrzeug problemlos auch in eine Waschstraße fahren ohne dass Wasser in die Fahrgastzelle dringt. Das Abdeckelement kann hierbei durch die lichtdurchlässige Einrichtung ersetzt werden, oder über oder unter der lichtdurchlässigen Einrichtung angeordnet werden.

### Kurzbeschreibung der Zeichnungen

Die Erfindung wird im Folgenden beispielhaft unter Bezugnahme auf die Zeichnungen beschrieben.
- Fig. 1a: ist eine Draufsicht einer erfindungsgemäßen lichtdurchlässigen Einrichtung in einer Karosserieöffnung.
- Fig. 1b: ist eine Detailansicht einer erfindungsgemäßen lichtdurchlässigen Einrichtung gemäß Fig. 1a.
- Fig. 1c: ist eine Schnittansicht einer erfindungsgemäßen lichtdurchlässigen Einrichtung gemäß Fig. 1a.
- Fig. 2a: zeigt eine weitere Darstellung einer erfindungsgemäßen lichtdurchlässigen Einrichtung in einer Karosserieöffnung.
- Fig. 2b: zeigt eine Teildarstellung einer Schnittansicht einer erfindungsgemäßen lichtdurchlässigen Einrichtung gemäß Fig. 2a.
- Fig. 2c: ist eine Schnittansicht einer erfindungsgemäßen lichtdurchlässigen Einrichtung gemäß Fig. 2a.
- Fig. 3a: zeigt eine weitere Darstellung einer erfindungsgemäßen lichtdurchlässigen Einrichtung in einer Karosserieöffnung.
- Fig. 3b: zeigt eine Teildarstellung einer Schnittansicht einer erfindungsgemäßen lichtdurchlässigen Einrichtung gemäß Fig. 3a.
- Fig. 3c: zeigt eine weitere Teildarstellung einer Schnittansicht einer erfindungsgemäßen lichtdurchlässigen Einrichtung gemäß Fig. 3a.
- Fig. 4: zeigt eine weitere Darstellung einer erfindungsgemäßen lichtdurchlässigen Einrichtung in einer Karosserieöffnung.
- Fig. 5: zeigt eine Teildarstellung einer Schnittansicht einer erfindungsgemäßen lichtdurchlässigen Einrichtung gemäß Fig. 4.
- Fig. 6: zeigt eine Teildarstellung einer Schnittansicht einer erfindungsgemäßen lichtdurchlässigen Einrichtung gemäß Fig. 4.
- Fig. 7: zeigt eine Teildarstellung einer Schnittansicht einer erfindungsgemäßen lichtdurchlässigen Einrichtung gemäß Fig. 4.

### Detaillierte Beschreibung der Erfindung

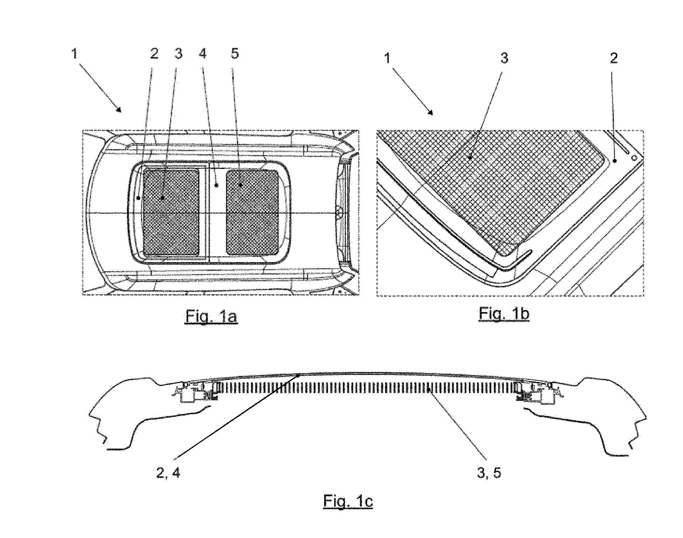

In den Fig. 1a-1c ist eine erfindungsgemäße lichtdurchlässigen Einrichtung 3, 5 dargestellt, welche in einer Karosserieöffnung eines Kraftfahrzeugs angeordnet ist. In Fig. 1a ist ein Fahrzeugdach 1 dargestellt, in welchem zwei lichtdurchlässige Einrichtungen 3, 5 angeordnet sind. Die lichtdurchlässigen Einrichtungen 3, 5 sind bevorzugt aus Metall oder Kunststoff, insbesondere Faserverbundwerkstoffe hergestellt. Die beiden lichtdurchlässige Einrichtungen 3, 5 sind von Abdeckelementen 2, 4 abgedeckt. Die Abdeckelemente 2, 4, in diesem Fall Dachelemente, sind bevorzugt Glasabdeckungen. Alternativ können auch metallische Abdeckvorrichtungen verwendet werden.

In Fig. 1b wird in einer Teilansicht der Fig. 1a die lichtdurchlässige Einrichtung 3 dargestellt. Die Öffnungen der lichtdurchlässigen Einrichtung 3, 5 weisen hier eine annähernd quadratische Form auf. Im Rahmen der Erfindung sind jedoch auch andere Geometrien und Formen denkbar, beispielsweise können die Öffnungen der lichtdurchlässigen Einrichtung 3, 5 wabenförmig oder rechteckig ausgebildet sein.

Fig. 1c ist eine Schnittansicht von Fig. 1a und zeigt die Anordnung der lichtdurchlässigen Einrichtung 3, 5 in der Karosserieöffnung, in diesem Fall in einer Fahrzeugdachöffnung. Die lichtdurchlässigen Einrichtung 3, 5 ist von einem Abdeckelement 2, 4 abgedeckt. Das Dachelement ist vor allem bei kalten und schlechten Wetterverhältnissen von Vorteil.

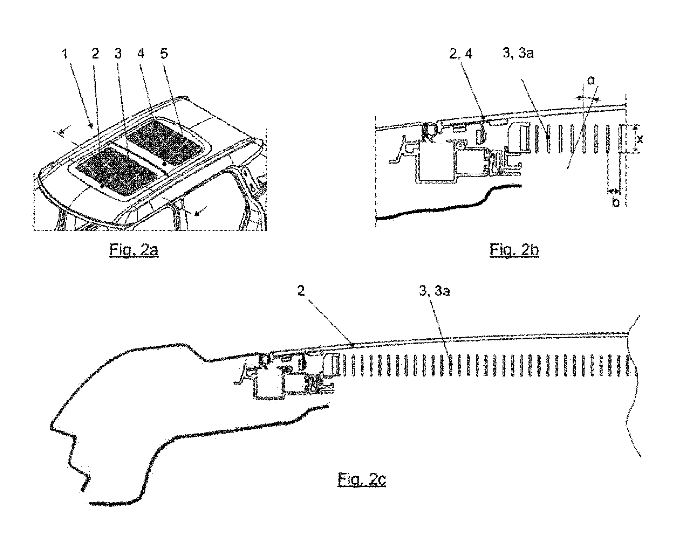

In den Fig. 2a-2c wird auf das Verhältnis Höhe zu Materialstärke der Stege 3a, 5a der lichtdurchlässigen Einrichtung 3, 5 beschrieben.

Aus Fig. 2a ist ein Fahrzeugdach 1 ersichtlich in welchem die lichtdurchlässigen Einrichtungen 3, 5 und Abdeckelemente 2, 4 dargestellt sind. Fig. 2b und Fig. 2c sind Teilansichten von Schnittdarstellungen der Fig. 2a in Fahrzeuglängsrichtung.

In Fig. 2b ist die lichtdurchlässige Einrichtung 3 im Schnitt gemäß Fig. 2a dargestellt. Die Stege 3a weisen eine Höhe x und eine Materialstärke auf, wobei die Materialstärke der Stege 3a, 5a bevorzugt zwischen 0,2 mm und 2 mm liegen. Dies erlaubt eine leichte und doch feste bzw. Steife Ausführung.

Das Verhältnis der Materialstärke der Stege 3a, 5a zur Höhe x der Stege 3a, 5a ist bevorzugt zwischen 1:2 bis 1:8. Falls erforderlich kann das Verhältnis zwischen der Materialstärke und der Höhe x auch ein anderes sein.

Die Höhe x der Stege 3a, 5a weisen gegenüber den Öffnungsdurchmessern b der lichtdurchlässigen Einrichtungen 3, 5 ein Verhältnis bevorzugt zwischen 2:1 bis 1:2 auf. Dies ermöglicht eine hohe Steifigkeit und Festigkeit bei einer flachen Strukturbauweise.

Die Größe der Öffnungen der lichtdurchlässigen Einrichtung 3, 5 liegt zwischen 1 mm² und 2500 mm², bevorzugt zwischen 1 mm² und 400 mm². Die Größe der Öffnungen ist so gewählt, dass von außerhalb des Fahrzeugs nicht in den Innenraum zugegriffen werden kann.

Durch die passende Materialauswahl und Materialstärke kann die lichtdurchlässige Einrichtung 3, 5 auch als Deformationselement, im Falle eines Unfalles, fungieren.

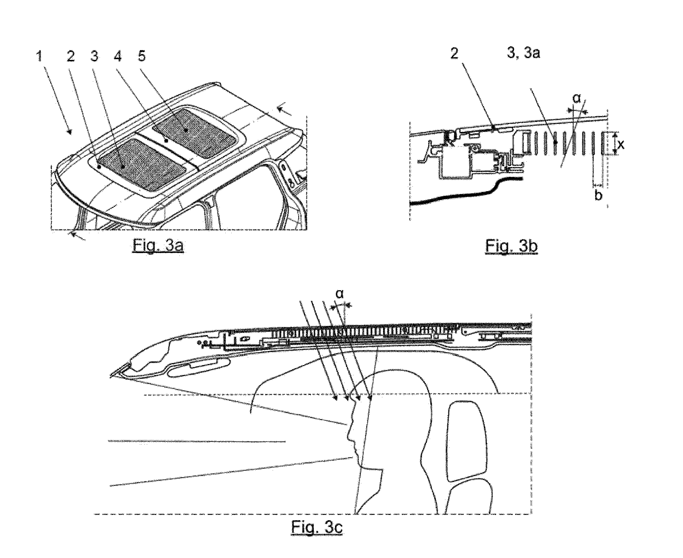

In den Fig. 3a- Fig. 7 wird der mögliche Einstrahlwinkel durch eine von außen wirkende Lichtquelle, beispielsweise die Sonne, dargestellt. Es wird auch ein möglicher Luftstrom in die Fahrgastzelle dargestellt, der erfolgen kann, wenn das Abdeckelement 2, 4 entfernt worden ist.

Aus Fig. 3a ist ein Fahrzeugdach 1 ersichtlich in welchem die lichtdurchlässigen Einrichtungen 3, 5 und Abdeckelemente 2, 4 dargestellt sind. Fig. 3b und Fig. 3c sind Teilansichten von Schnittdarstellungen der Fig. 3a in Fahrzeugquerrichtung.

In Fig. 3b ist die lichtdurchlässige Einrichtung 3 im Schnitt gemäß Fig. 3a dargestellt. Die lichtdurchlässige Einrichtung 3, 5 weist eine Höhe x und eine Materialstärke der Stege 3a, 5a auf, wobei der Öffnungsdurchmesser b der lichtdurchlässigen Einrichtung 3, 5 und die Höhe x der Stege 3a, 5a den max. Einstrahlwinkel α einer von außen leuchtenden Lichtquelle bestimmen. Durch eine längere Höhe x kann der Einstrahlwinkel α verkleinert werden. Dies hat den Vorteil, dass bei einer Lichteinstrahlung von vorne oben, wie in Fig. 3c dargestellt, die Blendwirkung reduziert werden kann.

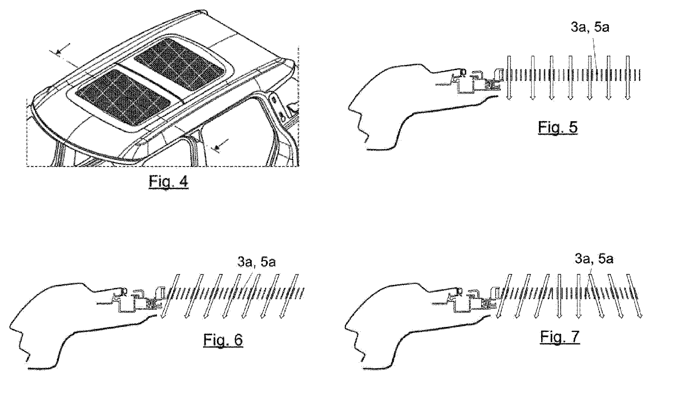

Fig. 5 zeigt einen Teil einer Steganordnung einer lichtdurchlässigen Einrichtung 3, 5 in einer Schnittansicht gemäß Fig. 4. Da die Stege 3a, 5a senkrecht angeordnet sind, kann bei einem entfernten Abdeckelement 2, 4 ein im wesentlichen senkrechter Luftstrom in den Innenraum eines Kraftfahrzeuges erfolgen. In Fig. 6 wird ebenfalls ein Teil einer Steganordnung einer lichtdurchlässigen Einrichtung 3, 5 in einer Schnittansicht gemäß

Fig. 4 dargestellt. Bei dieser Ausführungsvariante weisen die Stege 3a, 5a eine Schräge auf, wodurch einerseits ein eindringender Luftstrom abgelenkt wird, andererseits wird durch die Schrägstellung der Stege 3a, 5a der Einstrahlwinkel durch eine von außen wirkende Lichtquelle geändert.

In Fig. 7 wird ein Teil einer Steganordnung einer weiteren Ausführungsmöglichkeit einer Schnittansicht gemäß Fig. 4 dargestellt. In diesem Ausführungsbeispiel weisen die Stege 3a, 5a unterschiedliche Winkel, wodurch die Öffnungen der lichtdurchlässigen Einrichtung 3, 5 unterschiedliche Querschnitte aufweisen können, wobei die Stege 3a, 5a zumindest teilweise spiegelsymmetrisch zu einer vertikalen Ebene der Stege 3a, 5a ausgebildet sein können.

In den Fig. 5 - 7 sind die Schnittansichten in Fahrzeuglängsrichtung dargestellt. Es versteht sich jedoch von selbst, dass die Ausbildung der Stege 3a, 5a im Rahmen der Erfindung auch in Fahrzeugquerrichtung entsprechend ausgebildet werden können.

### Bezugszeichenliste

- 1: Fahrzeugdach
- 2: Abdeckelement
- 3: lichtdurchlässige Einrichtung
- 3a: Stege
- 4: Abdeckelement
- 5: lichtdurchlässige Einrichtung
- 5a: Stege

- a: Einstrahlwinkel
- b: Öffnungsdurchmesser
- x: Höhe

## Patentansprüche

1. Kraftfahrzeug mit einer lichtdurchlässigen Einrichtung (3, 5), zur Abdeckung einer Karosserieöffnung zu einer Fahrgastzelle,
**dadurch gekennzeichnet, dass** die lichtdurchlässige Einrichtung (3, 5)) eine löchrige Struktur aufweist die aus Stegen (3a, 5a) gebildet ist, um die Blendwirkung einer äußeren Lichtquelle in der Fahrgastzelle zu verringern und um die in die Fahrgastzelle eintretende Luftströmung zu verringern und/oder zu steuern.

2. Kraftfahrzeug mit einer lichtdurchlässigen Einrichtung (3, 5) nach Anspruch 1,
**dadurch gekennzeichnet, dass** die Stege (3a, 5a) Wabenformen bilden.

3. Kraftfahrzeug mit einer lichtdurchlässigen Einrichtung (3, 5) nach Anspruch 1,
**dadurch gekennzeichnet, dass** die Stege (3a, 5a) quadratische oder rechteckige Öffnungen bilden.

4. Kraftfahrzeug mit einer lichtdurchlässigen Einrichtung (3, 5) nach Anspruch 1,
**dadurch gekennzeichnet, dass** Stege (3a, 5a) senkrecht oder schräg zur Karosserieöffnung angeordnet sind.

5. Kraftfahrzeug mit einer lichtdurchlässigen Einrichtung (3, 5) nach Anspruch 1,
**dadurch gekennzeichnet, dass** die Materialstärke der Stege (3a, 5a) vorzugsweise zwischen 0,2 mm und 2 mm beträgt.

6. Kraftfahrzeug mit einer lichtdurchlässigen Einrichtung (3, 5) nach Anspruch 1,
**dadurch gekennzeichnet, dass** das Verhältnis zwischen den Öffnungsdurchmessern (b) und der Höhe (x) der Stege (3a, 5a) bei senkrechten Öffnungen zwischen 2:1 und 1:2 liegt.

7. Kraftfahrzeug mit einer lichtdurchlässigen Einrichtung (3, 5) nach Anspruch 1,
**dadurch gekennzeichnet, dass** die Öffnungen eine Fläche zwischen 1 mm² und 2500 mm², bevorzugt zwischen 1 mm² und 400 mm² aufweisen.

8. Kraftfahrzeug mit einer lichtdurchlässigen Einrichtung (3, 5) nach Anspruch 1,
**dadurch gekennzeichnet, dass** das Verhältnis der Materialstärke des Stegs zur Höhe (x) des Stegs 1:2, 1:4 bzw. 1:8 beträgt.

9. Kraftfahrzeug mit einer lichtdurchlässigen Einrichtung (3, 5) nach Anspruch 1,
**dadurch gekennzeichnet, dass** die lichtdurchlässige Einrichtung in Abhängigkeit der Öffnungsdurchmesser (b) und der Höhe (x) der Stege ein direktes Durchscheinen der äußeren Lichtquelle in einem definierten Einstrahlwinkel (α), zwischen 0° und 45° zur Vertikalen der Stege (3a, 5a), ermöglicht.

10. Kraftfahrzeug mit einer lichtdurchlässigen Einrichtung (3, 5) nach Anspruch 9,
**dadurch gekennzeichnet , dass** zumindest zwei Stege (3a, 5a) unterschiedliche Einstrahlwinkel (α) aufweisen, insbesondere spiegelsymmetrisch zu einer vertikalen Ebene der Stege.

11. Kraftfahrzeug mit einer lichtdurchlässigen Einrichtung (3, 5) nach Anspruch 1,
**dadurch gekennzeichnet, dass** die lichtdurchlässige Einrichtung (3, 5) eine feste Struktur bildet, die einen Zugriff von außerhalb des Kraftfahrzeugs in die Fahrgastzelle verhindert.

12. Kraftfahrzeug mit einer lichtdurchlässigen Einrichtung (3, 5) nach Anspruch 1,
**dadurch gekennzeichnet, dass** die Stege (3a, 5a) eine Farbgebung aufweisen, so dass das Innenraumgefühl der Fahrgastzelle beeinflusst wird.

13. Kraftfahrzeug mit einer lichtdurchlässigen Einrichtung (3, 5) nach Anspruch 1,
**dadurch gekennzeichnet , dass** die Karosserieöffnung alternativ von einem Abdeckelement (2, 4) abdeckbar oder mit diesem austauschbar ist.
